# EUROPÄISCHE PATENTSCHRIFT

(11) **EP 2 326 855 B1**
(45) Veröffentlichungstag und Bekanntmachung des Hinweises auf die Patenterteilung: **06.03.2013**
(21) Anmeldenummer: 09781841.3
(22) Anmeldetag: 14.08.2009
(51) Int. Cl.: F16F 1/373, F16F 1/376

(54) **ZUSATZFEDER**
SUPPLEMENTAL SPRING
RESSORT AUXILIAIRE

(30) Priorität: 20.08.2008 EP 08162670
(43) Veröffentlichungstag der Anmeldung: 01.06.2011
(73) Patentinhaber: BASF SE, 67056 Ludwigshafen (DE)
(72) Erfinder: WOLFF, Mario, 49179 Ostercappeln (DE)
(86) Internationale Anmeldenummer: PCT/EP2009/060538
(87) Internationale Veröffentlichungsnummer: WO 2010/020588

(56) Entgegenhaltungen:
- DE-A1-102004 049 638
- DE-A1-102004 054 958
- DE-B- 1 253 522
- DE-U1- 20 113 721
- DE-U1- 20 314 768
- US-A- 3 037 764
- US-A- 3 409 284

## Beschreibung

Die Erfindung betrifft hohle, rotationssymmetrische und nicht rotationssymmetrische, z.B. solche mit ovaler Grundfläche und Formkörper mit Erhebungen auf der Mantelfläche, bevorzugt rotationssymmetrische elastische Federelemente (i), wobei die äußere Oberfläche, d.h. die Mantelfläche, des Federelementes mindestens eine, bevorzugt 1 bis 6. besonders bevorzugt 1 bis 4, insbesondere 1 bis 3 umlaufende Kerbe(n) (xii) aufweist, die an ihrem Grund eine Kerbgeometrie mit einem Krümmungsradius (xiv) von kleiner 1 mm, bevorzugt kleiner 0,3 mm, besonders bevorzugt zwischen 0,1 mm und 0,25 mm aufweisen, der Kerbwinkel (xvi) der Kerbe (xii) kleiner 90 ° ist und der Krümmungsradius der Kerbrandgeometrie (xv) größer als 3 mm ist.. "Umlaufend" bedeutet, dass die Kerben den Durchmesser des Federelementes über den gesamten Umfang des Federelementes verkleinern. Außerdem betrifft die Erfindung Automobilfahrwerke enthaltend die erfindungsgemäßen Federelemente, insbesondere Automobilfahrwerke, bei denen das erfindungsgemäße Federelement auf der Kolbenstange des Stoßdämpfers positioniert wird, d.h. die Kolbenstange in dem durchgängigen axial ausgerichteten Hohlraum des Federelementes (i) positioniert wird. Des Weiteren bezieht sich die Erfindung auf Automobile, beispielsweise Personenkraftfahrzeuge, Lastkraftwagen, Busse, enthaltend die erfindungsgemäßen Federelemente.

Aus Polyurethanelastomeren hergestellte Federungselemente werden in Automobilen beispielsweise innerhalb des Fahrwerks verwendet und sind allgemein bekannt, beispielsweise aus DE 10 2004 049 638 A1, WO 2005/019681 und DE 203 11 242 U1. Die DE 12 53 522 zeigt in der figürlichen Darstellung Ausführungsformen einzelner Federelemente mit spitz zulaufenden Kerben. Federlemente werden insbesondere in Kraftfahrzeugen als schwingungsdämpfende Federelemente eingesetzt. Dabei übernehmen die Federelemente eine Endanschlagfunktion, beeinflussen die Kraft-Weg-Kennung des Rades durch das Ausbilden oder Verstärken einer progressiven Charakteristik der Fahrzeugfederung. Die Nickeffekte des Fahrzeuges können reduziert werden und die Wankabstützung wird verstärkt. Insbesondere durch die geometrische Gestaltung wird die Anlaufsteifigkeit optimiert, dies hat maßgeblichen Einfluss auf den Federungskomfort des Fahrzeuges. Durch die gezielte Auslegung der Geometrie ergeben sich über der Lebensdauer nahezu konstante Bauteileigenschaften. Durch diese Funktion wird der Fahrkomfort erhöht und ein Höchstmaß an Fahrsicherheit gewährleistet.

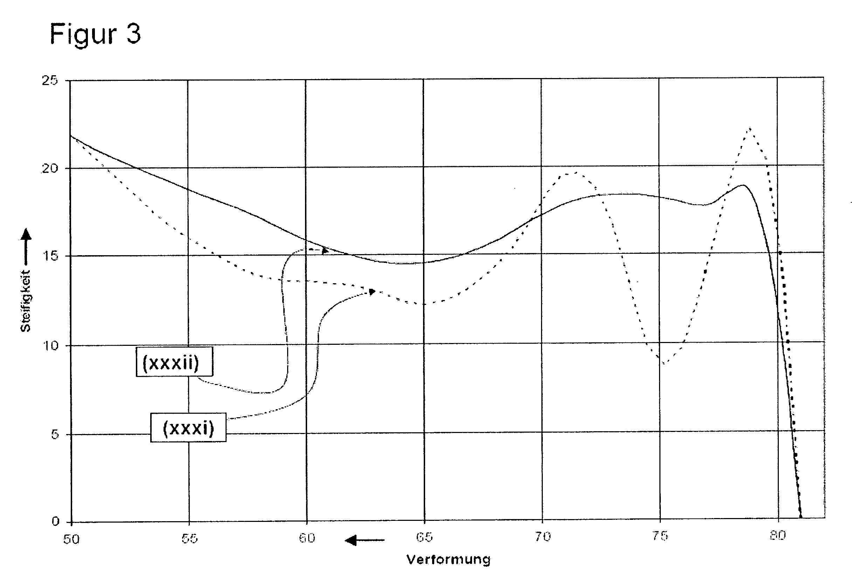

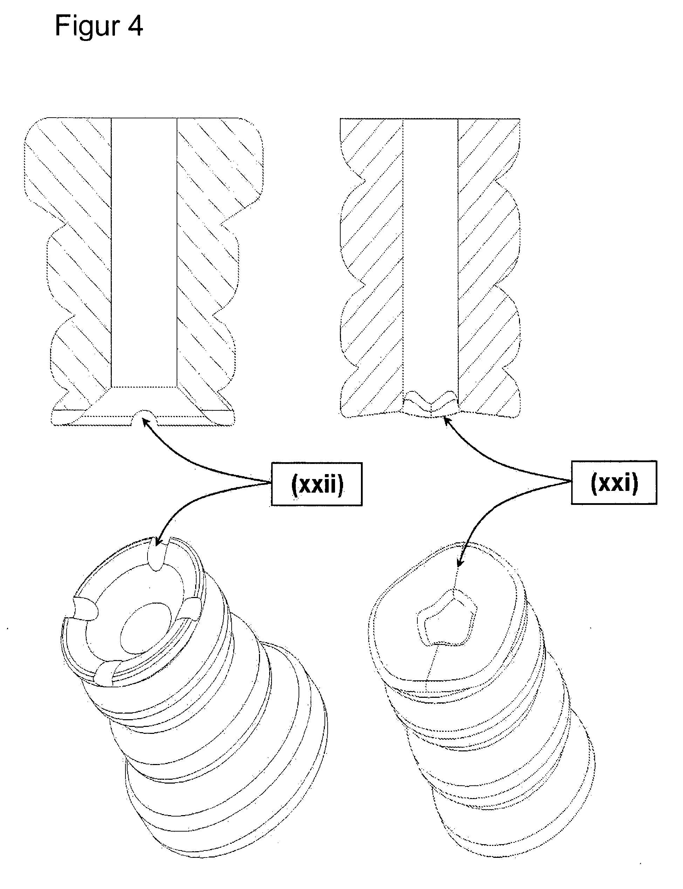

Eine Schwierigkeit in der dreidimensionalen Ausgestaltung der Zusatzfedern besteht in der Erzielung einer möglichst unauffälligen Charakteristik bei Eingreifen der zu federnden Komponenten in das Federelement, da jede Querschnittsänderung am Federelement zu Steifigkeitssprüngen in der Federcharakteristik führt (siehe Figur 3, (xxxi)). Gleichzeitig soll die Kontur hohen zyklischen Belastungen standhalten und dabei Material nicht über den zur Verfügung stehenden Bauraum quellen lassen.

Aufgabe der vorliegenden Erfindung war es somit, für eine Zusatzfeder, bevorzugt für eine Zusatzfeder für ein Automobilfahrwerk, eine dreidimensionale Form zu entwickeln, die einen gleichmäßigen, d.h. nicht oszillierenden Steifigkeitsverlauf (siehe Figur 3, (xxxii)) besitzt und das Material sehr homogen belastet. Wesentlich hierfür ist, dass das Federelement nicht zum Ausknicken, Beulen oder Ausquellen neigt.

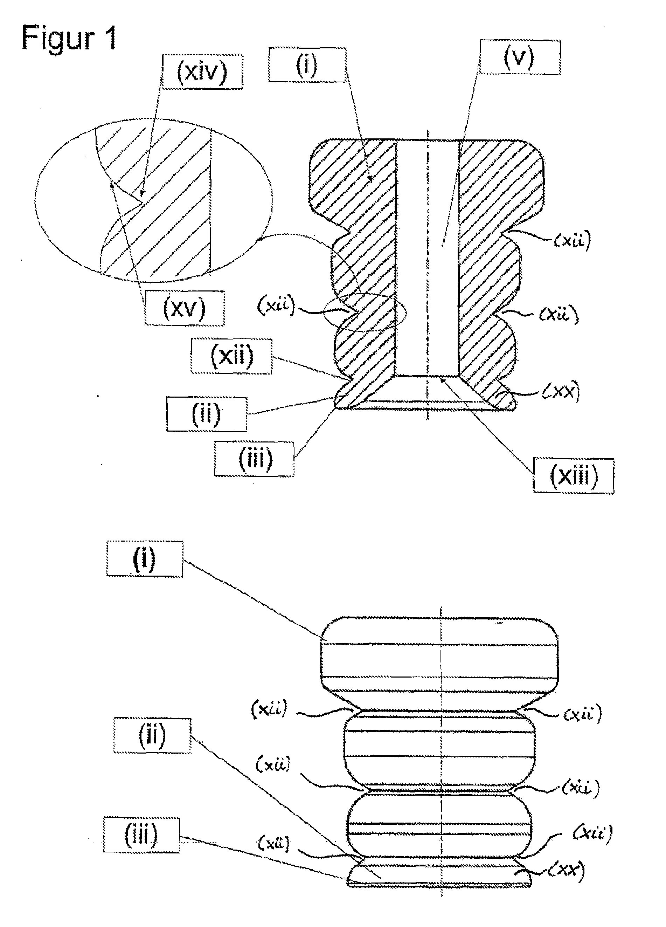

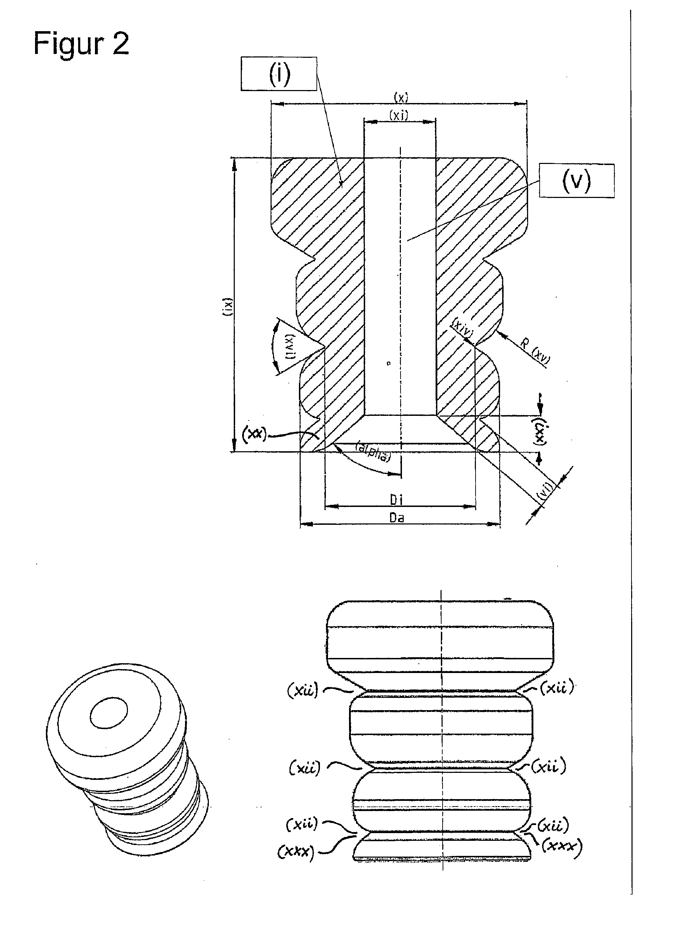

Diese Anforderungen werden durch die eingangs dargestellten Federelemente erfüllt. Ein beispielhaftes, erfindungsgemäßes Federelement ist im Detail in den Figuren 1 und 2 dargestellt. In allen Figuren sind die angegebenen Maße in [mm] angegeben.

Wie anhand der Figur 3 ersichtlich, in der die Steifigkeit in Abhängigkeit von der Verformung der Feder aufgetragen sind, zeigt die erfindungsgemäße Ausgestaltung, deren Verlauf mit (xxxii) gekennzeichnet ist, einen deutlich gleichmäßigeren Steifigkeitsverlauf als die Vergleichsfeder, deren Steifigkeitsverlauf mit (xxxi) gekennzeichnet ist.

Die erfindungsgemäßen Federelemente (i) zeichnen sich durch sehr enge Kerben aus. Dabei sind die Kerben bevorzugt koaxial angeordnet. Die Kerben stellen Einschnürungen dar, die den äußeren Durchmesser des Federelementes (i) über den gesamten Umfang des Federelementes verringern.

Durch die im Vergleich zum Stand der Technik sehr enge Ausgestaltung der Kerben kann erreicht werden, dass am Kerbgrund sich die Kerbe sofort und definiert faltet, während es bei größeren Radien zu einem plötzlichen Zusammenfallen mit dem entsprechenden Steifigkeitseinbruch kommt.

Die großen Radien (xv) führen nach dem Schließen der Kerbe zu einer gleichmäßigen Vergrößerung des wirksamen Druckquerschnittes.

Es war für den Fachmann überraschend, dass dieser technische Erfolg durch die erfindungsgemäße Ausgestaltungsform der Kerben erzielt werden konnte, da üblicherweise angenommen wird, dass scharfkantige Gestaltungsmerkmale Stellen darstellen, an denen Federelemente (i) unter Belastung und starker Verformung bevorzugt einreißen, somit Schwachstellen darstellen. Weiterhin wurde angenommen, dass eine solche Kontur fertigungstechnische Probleme in Form von Lufteinschlüssen mit sich bringt, da der aufsteigende Schaum am scharfkantigen Übergang zum Umklappen und damit Einschließen von Luft neigt.

Bevorzugt sind Federelemente (i), bei denen die umlaufenden Einschnürungen auf der äußeren Oberfläche alle in Form der erfindungsgemäßen Kerbe (xii) ausgestaltet sind. Erfinfungsgemäß ist der Kerbwinkel (xvi) der Kerbe (xii) kleiner 90°, besonders bevorzugt kleiner 70°. Insbesondere beträgt der Kerbwinkel (xvi) der Kerbe (xii) zwischen 50° und 70°.

Bevorzugt ist der Kerbwinkel der Kerbe symmetrisch um die Horizontalebene zur Zylinderachse angeordnet, welche durch den tiefsten Punkt der Einschnürung verläuft. Die Horizontalebene ist dadurch definiert, dass sie orthogonal zur Rotationsachse verläuft.

Erfinfungsgemäß ist der Krümmungsradius des Kerbrandes (xv) der Kerbe größer als 3 mm ist, besonders bevorzugt größer als 7 mm, insbesondere zwischen 9 mm und 11 mm. Besonders bevorzugt besitzt der Krümmungsradius des Kerbrandes (xv) einen Radius, der der Differenz Da - Di entspricht, wobei Di den Durchmesser des Federelementes (ii) am Grund der Kerbe (xii) darstellt, die dem Kerbrand am nächsten liegt, und Da der Durchmesser des Federelementes an der Stelle ist, an der die Verrundung tangential einläuft. Dies ist in der Figur 2 dargestellt.

Bevorzugt weist das Federelement (i) eine Biegelippe (xx) auf, wobei die Biegelippe (xx) an einem axialen Ende des Federelementes angeordnet ist. Als Biegelippen kommen allgemein bekannte Formen in Frage, die eine weiche Einfederung gewährleisten, beispielsweise Blütenformen (eine Feder mit Blütenform wird beispielsweise in DE 20 2004 003 829 U1 beschrieben), Wellenformen (WO 2005/019681) oder ein nach außen gerichteter Rand (DE 10 2004 049 638 A1). Dabei sind Federelemente (i) bevorzugt, bei denen der Rand (ii) der Biegelippe (xx) nach außen gerichtet ist und sich der Hohlraum (v) des Federelementes (i) in der Höhe der Biegelippe (xx) erweitert. Dabei bedeutet "Höhe der Biegelippe" den Teil des Federelementes in axialer Richtung, in dessen Bereich sich die Biegelippe (xx) befindet. Diese Höhe ist in der Figur 1 die axiale Länge beginnend an der Stelle (xiii) bis zum unteren Ende des Federelementes. Dieser Bereich kann auch als Auslaufzone bezeichnet werden. Gemäß der Figuren 1 und 2 stellt der Rand (ii) quasi die Biegelippe (xx) dar, wobei die Biegelippe (xx) den gesamten Bereich am Ende des Federelementes (i) darstellt, in dem sich der Hohlraum (v) erweitert. Bei Anwendungen, bei denen eine weitestgehend rein-uniaxiale Belastung vorherrscht und die Verwendung einer nach außen gerichteten Biegelippe vorgesehen ist, kann dem Entstehen eines initialen Steifigkeitssprungs durch die Konturierung der Biegelippe vorgebeugt werden. Diese wird bevorzugt durch eine Wellenstruktur (xxi) oder durch Unterbrechungen (xxii) erreicht. Durch die Reduzierung der Fläche, welche beim ersten Kontakt beansprucht wird, kann der Kraft- bzw. Steifigkeitsverlauf signifikant beeinflusst werden. Bei Zusatzfedern, welche einen nicht-rein-axialen Kontakt erfahren, ist die nicht konturierte Biegelippe mit nach außen gerichteten Rand zu bevorzugen, da hierdurch frühzeitig lediglich ein kleiner Bereich in Eingriff kommt. Anhand der Figuren wird die besondere, bevorzugte Ausgestaltung des Randes (ii) deutlich. Dieser Rand weist bevorzugt nach außen, d.h. von Hohlraum des Federelementes weg. Dies bedeutet, dass sich der Hohlraum zur Stirnseite des Federelementes durch die besondere Ausgestaltung des Randes (ii) öffnet. Unter dem Ausdruck "Stirnseite" ist dabei nicht die Mantelfläche des Zylinders zu verstehen, sondern mindestens eine, bevorzugt beide Endflächen, die sich bevorzugt senkrecht zu der Mantelfläche an den beiden axialen Enden des Zylinders befinden. Unter "axiale Richtung" ist die Richtung parallel zur Höhe des Zylinders zu verstehen. Aufgrund dieser Ausgestaltung wird zum einen erreicht, dass die Feder einen weichen Einsatz hat. Zum anderen eröffnet die erfindungsgemäße Ausgestaltung fertigungstechnische Vorteile, da die Federelemente einfacher, schneller und mit weniger Ausschuss entformt werden können. Der bevorzugte Rand (ii) ist in den Figuren 1 und 2 deutlich gekennzeichnet. Er stellt das axiale Ende des Federelementes (i) dar, dessen Abschluss die Kante (iii) bildet.

Diese bevorzugte Ausgestaltung der Biegelippe zusammen mit den erfindungsgemäßen engen um den gesamten Umfang des Federelementes (i) laufende Kerben gewährleisten, dass der Steifigkeitsanstieg bis zur Belastungsgrenze gleichmäßig verläuft, d.h. nicht oszilliert. Weiterhin wird erreicht, dass sich das Material bei axialer Verformung tendenziell in Richtung Hohlraum (v) schiebt, in dem sich üblicherweise die Kolbenstange des Stoßdämpfers befindet, welches signifikant das Ausquellen unter starker Belastung reduziert. Ein Phänomen, welches bei konventioneller Ausgestaltung unter gewissen geometrischen Bedingungen auftritt, ist das Überstülpen der Biegelippe über den Kontaktkörper, welcher im Allgemeinen durch den Stoßdämpfer dargestellt wird. Dieses führt unweigerlich zur Reduzierung der Dauerfestigkeit der Zusatzfeder mit diversen weiteren nachteiligen Effekten. Durch die hier beschriebene Ausgestaltung wird prinzipbedingt dieser Effekt vermieden.

Besonders bevorzugt sind Federelemente, bei denen eine Kerbe (xii) in dem Abschnitt des Federelementes (i) angeordnet ist, in dem sich der Hohlraum (v) erweitert, d.h. in dem Bereich der Biegelippe (xx). Diese Kerbe (xii), die sich im Bereich der Biegelippe befindet, ist in der Figur 2 mit (xxx) zusätzlich zu (xii) gekennzeichnet. Dies bietet den Vorteil, dass es nicht zu einer plötzlichen Vergrößerung des wirksamen Querschnitts kommt, da die Querschnittsvergrößerung an der Biegelippe noch nicht abgeschlossen ist, während sich die Kerbe im Bereich der Biegelippe (xxx) schließt. Dieser Effekt wird verstärkt, wenn die Kerbe (xxx) sich zwischen dem Übergang (xiii) des Hohlraumes (v) zur Biegelippe (xx) und der Stirnfläche des Federelementes (iii) befindet.

Bevorzugt sind Federelemente, bei denen der Winkel α zwischen dem Rand (ii), bevorzugt der zum Hohlraum gerichteten Oberfläche des Randes, besonders bevorzugt sowohl der zum Hohlraum (v) gerichteten Oberfläche des Randes (ii) und der äußeren Mantelfläche des Randes (ii), und der Längsachse des Hohlraumes (v) zwischen 25° und 70°, besonders bevorzugt zwischen 35° und 60°, insbesondere 50° beträgt.

Der Rand (ii) weist bevorzugt eine Dicke (vi) zwischen 2 mm und 8 mm, besonders bevorzugt zwischen 2 mm und 6 mm, insbesondere zwischen 3 mm und 4 mm auf. Der Rand (ii) weist bevorzugt eine Höhe (ixx) zwischen 5 mm und 20 mm, besonders bevorzugt zwischen 5 mm und 10 mm auf.

Das Federelement kann für Zusatzfedern allgemein übliche Maße, d.h. Längen und Durchmesser annehmen. Bevorzugt weist das Federelement (i) eine Höhe (ix) zwischen 30 mm und 200 mm, besonders bevorzugt zwischen 40 mm und 120 mm auf. Bevorzugt beträgt der äußere Durchmesser (x) des Federelementes (i) zwischen 30 mm und 100 mm, besonders bevorzugt zwischen 40 mm und 70 mm. Bevorzugt ist der Durchmesser (xi) des Hohlraums des Federelementes (i) zwischen 10 mm und 30 mm. Unter dem Ausdruck Hohlraum ist bevorzugt ein in axialer Richtung durchgehender, d.h. sich durch das gesamte Federelement erstreckender Hohlraum zu verstehen. Die Wand des Federelementes (i), die den Hohlraum begrenzt, ist bevorzugt koaxial in dem bevorzugt rotationssymmetrischen Federelement (i) positioniert.

Die erfindungsgemäßen Federelemente (i) basieren bevorzugt auf allgemein bekannten Elastomeren, beispielweise Gummi oder Polyisocyanat-Polyadditionsprodukten. Bevorzugt basieren sie auf zelligen Polyurethanelastomeren, die ggf. Polyharnstoffstrukturen enthalten können, besonders bevorzugt auf zelligen Polyurethanelastomeren bevorzugt mit einer Dichte nach DIN EN ISO 845 zwischen 200 bis 1100 kg/m³, bevorzugt 300 bis 800 kg/m³, einer Zugfestigkeit nach DIN EN ISO 1798 von > 2 N/mm², bevorzugt > 4 N/mm², besonders bevorzugt zwischen 2 und 8 N/mm², einer Dehnung nach DIN EN ISO 1798 von ≥ 200 %, bevorzugt ≥ 230 %, besonders bevorzugt zwischen 300 bis 700 %, und eine Weiterreißfestigkeit nach DIN ISO 34-1 B(b) von ≥ 6 N/mm, bevorzugt ≥ 10 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukten werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind nach bis zu 60 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

## Patentansprüche

1. Hohles Federelement (i) wobei die äußere Oberfläche des Federelementes mindestens eine umlaufende Kerbe (xii) aufweist, die an ihrem Grund eine Kerbgeometrie mit einem Krümmungsradius (xiv) von kleiner 1 mm aufweist, der Kerbwinkel (xvi) der Kerbe (xii) kleiner 90°ist, **dadurch gekennzeichnet, dass** der Krümmungsradius der Kerbrandgeometrie (xv) größer als 3 mm ist.

2. Federelement gemäß Anspruch 1, **dadurch gekennzeichnet, dass** der Kerbwinkel der Kerbe symmetrisch um die Horizontalebene zur Zylinderachse angeordnet ist.

3. Federelement gemäß Anspruch 1, **dadurch gekennzeichnet, dass** das Federelement (i) eine Biegelippe (xx) aufweist, wobei die Biegelippe (xx) an einem axialen Ende des Federelementes angeordnet ist.

4. Federelement gemäß Anspruch3, **dadurch gekennzeichnet, dass** der Rand (ii) der Biegelippe (xx) nach außen gerichtet ist und sich der Hohlraum (v) des Federelementes (i) in der Höhe der Biegelippe (xx) erweitert.

5. Federelement gemäß Anspruch 4, **dadurch gekennzeichnet, dass** die Stirnseite der Biegelippe eine Wellenstruktur (xxi) oder Unterbrechungen (xxii) aufweist.

6. Federelement gemäß Anspruch 1, **dadurch gekennzeichnet, dass** eine Kerbe (xii) in dem Abschnitt des Federelementes (i) angeordnet ist, in dem sich der Holraum (v) erweitert.

7. Federelement gemäß Anspruch 1, **dadurch gekennzeichnet, dass** der Winkel α zwischen dem Rand (ii) und der Längsachse des Hohlraumes zwischen 25° und 70° beträgt.

8. Federelement gemäß Anspruch 1, **dadurch gekennzeichnet, dass** der Rand (ii) eine Dicke (vi) zwischen 2 mm und 8 mm aufweist.

9. Federelement gemäß Anspruch 1, **dadurch gekennzeichnet, dass** der Rand (ii) eine Höhe zwischen 5 mm und 20 mm aufweist.

10. Federelement gemäß Anspruch 1, **dadurch gekennzeichnet, dass** das Federelement (i) eine Höhe (ix) zwischen 30 mm und 200 mm aufweist.

11. Federelement gemäß Anspruch 1, **dadurch gekennzeichnet, dass** der äußere Durchmesser (x) des Federelementes (i) zwischen 30 mm und 100 mm beträgt.

12. Federelement gemäß Anspruch 1, **dadurch gekennzeichnet, dass** der Durchmesser (xi) des Hohlraums des Federelementes (i) zwischen 10 mm und 30 mm beträgt.

13. Federelement gemäß Anspruch 1, **dadurch gekennzeichnet, dass** das Federelement auf Gummi oder Polyisocyanat-Polyadditionsprodukten basiert.

14. Federelement gemäß Anspruch 1, **dadurch gekennzeichnet, dass** das Federelement (i) auf zelligen Polyurethanelastomeren basiert.

15. Federelement gemäß Anspruch 1, **dadurch gekennzeichnet, dass** das Federelement (i) auf zelligen Polyurethanelastomeren mit einer Dichte nach DIN EN ISO 845 zwischen 200 bis 1100 kg/m³, einer Zugfestigkeit nach DIN EN ISO 1798 von > 2 N/mm², einer Dehnung nach DIN EN ISO 1798 von ≥ 200 % und eine Weiterreißfestigkeit nach DIN ISO 34-1 B(b) von ≥ 6 N/mm basiert.

## Claims

1. A hollow spring element (i), the outer surface of the spring element having at least one peripheral notch (xii), which has at its base a notch geometry with a radius of curvature (xiv) of less than 1 mm, the notch angle (xvi) of the notch (xii) being less than 90°, wherein the radius of curvature of the notch periphery geometry (xv) is greater than 3 mm.

2. The spring element according to claim 1, wherein the notch angle of the notch is arranged symmetrically about the horizontal plane in relation to the cylinder axis.

3. The spring element according to claim 1, wherein the spring element (i) has a bending lip (xx), the bending lip (xx) being arranged at one axial end of the spring element.

4. The spring element according to claim 3, wherein the periphery (ii) of the bending lip (xx) is outwardly directed and the hollow space (v) of the spring element (i) widens at the height of the bending lip (xx).

5. The spring element according to claim 4, wherein the end face of the bending lip has an undulating structure (xxi) or interruptions (xxii).

6. The spring element according to claim 1, wherein a notch (xii) is arranged in the portion of the spring element (i) in which the hollow space (v) widens.

7. The spring element according to claim 1, wherein the angle α between the periphery (ii) and the longitudinal axis of the hollow space is between 25° and 70°.

8. The spring element according to claim 1, wherein the periphery (ii) has a thickness (vi) of between 2 mm and 8 mm.

9. The spring element according to claim 1, wherein the periphery (ii) has a height of between 5 mm and 20 mm.

10. The spring element according to claim 1, wherein the spring element (i) has a height (ix) of between 30 mm and 200 mm.

11. The spring element according to claim 1, wherein the outer diameter (x) of the spring element (i) is between 30 mm and 100 mm.

12. The spring element according to claim 1, wherein the diameter (xi) of the hollow space of the spring element (i) is between 10 mm and 30 mm.

13. The spring element according to claim 1, wherein the spring element is based on rubber or polyisocyanate polyaddition products.

14. The spring element according to claim 1, wherein the spring element (i) is based on cellular polyurethane elastomers.

15. The spring element according to claim 1, wherein the spring element (i) is based on cellular polyurethane elastomers with a density in accordance with DIN EN ISO 845 of between 200 and 1100 kg/m³, a tensile strength in accordance with DIN EN ISO 1798 of > 2 N/mm², an elongation in accordance with DIN EN ISO 1798 of ≥ 200% and a tear propagation resistance in accordance with DIN ISO 34-1 B(b) of ≥ 6 N/mm.

## Revendications

1. Élément ressort creux (i), la surface extérieure de l'élément ressort comprenant au moins une rainure périphérique (xii), qui présente sur son fond une géométrie de rainure ayant un rayon de courbure (xiv) inférieur à 1 mm, l'angle de rainure (xvi) de la rainure (xii) étant inférieur à 90°, **caractérisé en ce que** le rayon de courbure de la géométrie de bord de la rainure (xv) est supérieur à 3 mm.

2. Élément ressort selon la revendication 1, **caractérisé en ce que** l'angle de rainure de la rainure est agencé de manière symétrique autour du plan horizontal par rapport à l'axe du cylindre.

3. Élément ressort selon la revendication 1, **caractérisé en ce que** l'élément ressort (i) présente une lèvre flexible (xx), la lèvre flexible (xx) étant agencée sur une extrémité axiale de l'élément ressort.

4. Élément ressort selon la revendication 3, **caractérisé en ce que** le bord (ii) de la lèvre flexible (xx) est orienté vers l'extérieur et la cavité (v) de l'élément ressort (i) s'élargit dans la hauteur de la lèvre flexible (xx).

5. Élément ressort selon la revendication 4, **caractérisé en ce que** le côté frontal de la lèvre flexible présente une structure ondulée (xxi) ou des interruptions (xxii).

6. Élément ressort selon la revendication 1, **caractérisé en ce qu'**une rainure (xii) est agencée dans la partie de l'élément ressort (i) où la cavité (v) s'élargit.

7. Élément ressort selon la revendication 1, **caractérisé en ce que** l'angle α entre le bord (ii) et l'axe longitudinal de la cavité est compris entre 25° et 70°.

8. Élément ressort selon la revendication 1, **caractérisé en ce que** le bord (ii) présente une épaisseur (vi) comprise entre 2 mm et 8 mm.

9. Élément ressort selon la revendication 1, **caractérisé en ce que** le bord (ii) présente une hauteur comprise entre 5 mm et 20 mm.

10. Élément ressort selon la revendication 1, **caractérisé en ce que** l'élément ressort (i) présente une hauteur (ix) comprise entre 30 mm et 200 mm.

11. Élément ressort selon la revendication 1, **caractérisé en ce que** le diamètre extérieur (x) de l'élément ressort (i) est compris entre 30 mm et 100 mm.

12. Élément ressort selon la revendication 1, **caractérisé en ce que** le diamètre (xi) de la cavité de l'élément ressort (i) est compris entre 10 mm et 30 mm.

13. Élément ressort selon la revendication 1, **caractérisé en ce que** l'élément ressort est à base de caoutchouc ou de produits de polyaddition de polyisocyanate.

14. Élément ressort selon la revendication 1, **caractérisé en ce que** l'élément ressort (i) est à base d'élastomères de polyuréthane cellulaires.

15. Élément ressort selon la revendication 1, **caractérisé en ce que** l'élément ressort (i) est à base d'élastomères de polyuréthane cellulaires ayant une densité selon DIN EN ISO 845 comprise entre 200 et 1100 kg/m³, une résistance à la traction selon DIN EN ISO 1798 > 2 N/mm², un allongement selon DIN EN ISO 1798 ≥ 200 % et une résistance à la propagation de fissures selon DIN ISO 34-1B(b) ≥ 6 N/mm.
